(19) 

Europäisches
Patentamt

European
Patent Office

Office européen
des brevets

(11) **EP 4 497 846 A1**

(12) **EUROPEAN PATENT APPLICATION**
published in accordance with Art. 153(4) EPC

(43) Date of publication:
**29.01.2025 Bulletin 2025/05**

(21) Application number: **23774291.1**

(22) Date of filing: **10.02.2023**

(51) International Patent Classification (IPC):
*C25B 9/00* (2021.01)    *C25B 15/023* (2021.01)
*C25B 1/04* (2021.01)

(52) Cooperative Patent Classification (CPC):
**C25B 1/04; C25B 9/00; C25B 15/023**

(86) International application number:
**PCT/JP2023/004591**

(87) International publication number:
**WO 2023/181692 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 JP 2022047530**

(71) Applicant: **DENSO CORPORATION**
**Kariya-city, Aichi 448-8661 (JP)**

(72) Inventors:
 • **NAKAJIMA Toshihisa**
   **Kariya- city, Aichi 4488661 (JP)**
 • **SHIBATA Kota**
   **Kariya- city, Aichi 4488661 (JP)**
 • **DOI Yasutoshi**
   **Kariya- city, Aichi 4488661 (JP)**
 • **CHATANI Shota**
   **Kariya- city, Aichi 4488661 (JP)**
 • **SAKURAI Daichi**
   **Kariya- city, Aichi 4488661 (JP)**
 • **KAWADA Shinji**
   **Kariya- city, Aichi 4488661 (JP)**
 • **OKAWA Hideaki**
   **Kariya- city, Aichi 4488661 (JP)**
 • **WASHINO Seiichiro**
   **Kariya- city, Aichi 4488661 (JP)**
 • **KANEKO Takashi**
   **Kariya- city, Aichi 4488661 (JP)**

(74) Representative: **TBK**
**Bavariaring 4-6**
**80336 München (DE)**

(54) **HYDROGEN PRODUCTION SYSTEM**

(57)    A hydrogen production system (10) includes: cell stacks (91), (92), (93) to produce hydrogen by electrolyzing water using supplied power; and a control unit (14). The control unit (14) controls at least one specific cell stack of the cell stacks (91), (92), (93). The control unit (14) selectively executes a load adjustment control to adjust a voltage or current of the power supplied to the specific cell stack, based on the amount of hydrogen production required for the entirety of the cell stacks (91), (92), (93), and an ON/OFF control to turn ON or OFF the power supplied to the specific cell stack.

EP 4 497 846 A1

EP 4 497 846 A1

# FIG. 1

**Description**

CROSS REFERENCE TO RELATED APPLICATION

This application is based on Japanese Patent Application No. 2022-047530 filed on March 23, 2022, the contents of which are incorporated herein by reference.

TECHNICAL FIELD

The present disclosure relates to a hydrogen production system.

BACKGROUND ART

A hydrogen production system described in Patent Document 1 is known, which produces hydrogen. The hydrogen production device includes: a cell stack that electrolyzes water vapor into hydrogen and oxygen by supplying electric power; a voltage adjustment unit that adjusts the voltage of the electric power to a thermal neutral point where the heat absorption and the heat generation in the cell stack, which is set to a predetermined cell temperature, are balanced; and a power supply unit that supplies the electric power, the voltage of which has been adjusted to the thermal neutral point, to the cell stack by controlling the pulse width based on the flow rate of the water vapor.

PRIOR ART LITERATURE

PATENT LITERATURE

Patent Document 1: JP 2020-41202 A

SUMMARY OF INVENTION

According to the above technology, all the cell stacks are controlled in the pulse width during the entire period in which hydrogen is being produced. In other words, the power supply to all the cell stacks is continuously controlled to be repeatedly turned on and off at short intervals. This makes the cell stack more susceptible to deterioration, which reduces the durability of the cell stack.
An object of the present disclosure is to provide a hydrogen production system with improved durability.
According to an aspect of the present disclosure, a hydrogen production system includes:

a plurality of cell stacks to produce hydrogen by electrolyzing water using electric power; and
a control unit configured to control at least one specific cell stack of the plurality of cell stacks.
The control unit selectively executes, based on the amount of hydrogen production required for the entirety of the cell stacks, a load adjustment control to adjust the voltage or current of the electric power supplied to the specific cell stack, and an ON/OFF control to turn ON or OFF the electric power supplied to the specific cell stack.

According to the above aspect, a hydrogen production system with improved durability can be provided.

BRIEF DESCRIPTION OF DRAWINGS

The above and other features and advantages of the present disclosure will become more apparent from the following detailed description made with reference to the accompanying drawings. In the drawings:

FIG. 1 is a structural block diagram showing a hydrogen production system according to a first embodiment;
FIG. 2 is a graph showing a change in amount of reaction heat with respect to a specific cell load adjustment rate in a cell stack of the first embodiment;
FIG. 3 is a graph showing a change in a specific cell load adjustment rate and a voltage applied to a cell stack with respect to a reaction time in the cell stack of the first embodiment;
FIG. 4 is a graph schematically showing a correspondence relationship between an overall load adjustment rate and a specific cell load adjustment rate, with respect to an operating state of the cell stack, in the entirety of the cell stacks according to the first embodiment;
FIG. 5 is a flowchart showing a main routine of the first embodiment;
FIG. 6 is a flowchart showing a one-cell process according to the first embodiment;

FIG. 7 is a flowchart showing a two-cell process according to the first embodiment;

FIG. 8 is a flowchart showing a three-cell process according to the first embodiment;

FIG. 9 is a graph schematically showing a relationship among an overall load adjustment rate, the number of operating cell stacks, a load adjustment control and an ON/OFF control in the first embodiment;

FIG. 10 is a graph schematically showing a control mode of the hydrogen production system according to the first embodiment;

FIG. 11 is a partially enlarged structural block diagram showing a cell stack in a hydrogen production system according to a second embodiment;

FIG. 12 is a graph schematically showing a relationship among an overall load adjustment rate, the number of operating cell stacks, and a load adjustment control in the second embodiment;

FIG. 13 is a partially enlarged structural block diagram showing a cell stack in a hydrogen production system according to a third embodiment;

FIG. 14 is a graph schematically showing a relationship among an overall load adjustment rate, the number of operating cell stacks, and a load adjustment control in the third embodiment;

FIG. 15 is a graph schematically showing a relationship among an overall load adjustment rate, the number of operating cell stacks, a load adjustment control and an ON/OFF control in a fourth embodiment;

FIG. 16 is a partially enlarged structural block diagram showing an electrolysis module in a hydrogen production system according to a fifth embodiment; and

FIG. 17 is a structural block diagram showing a hydrogen production system according to a sixth embodiment.

DETAILED DESCRIPTION

First Embodiment

1. Overall structure of Hydrogen production system 10

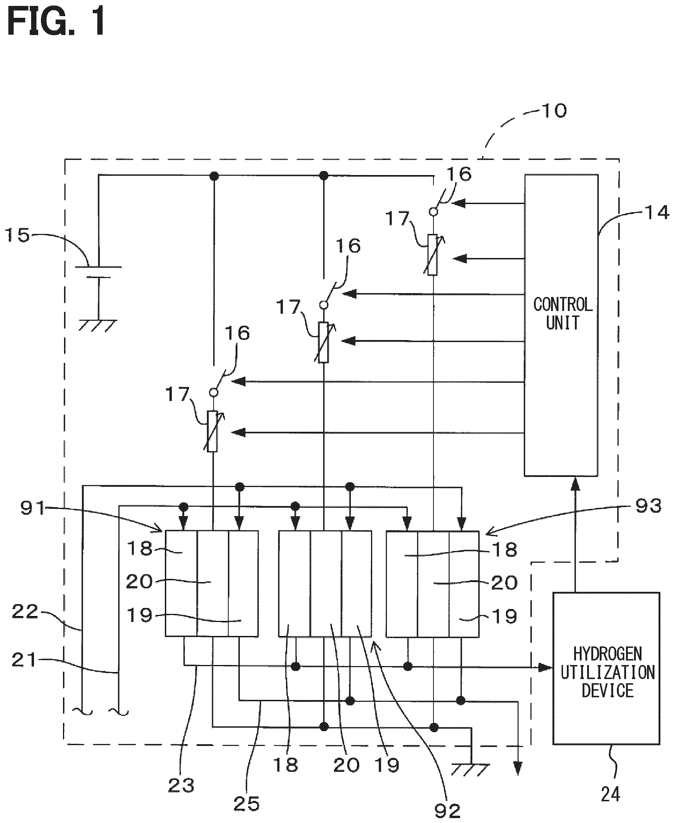

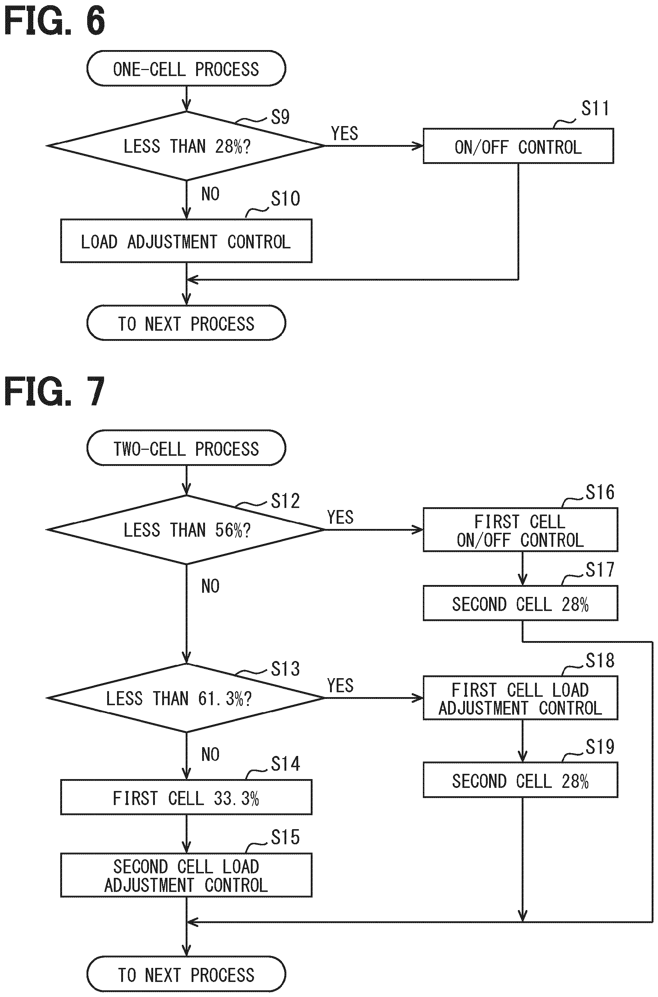

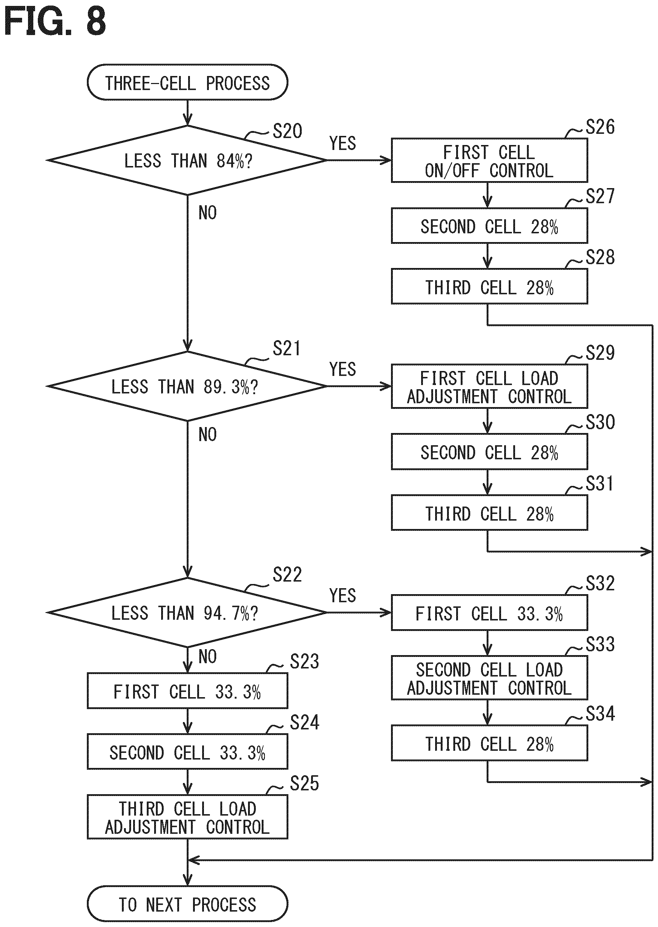

A hydrogen production system 10 according to a first embodiment will be described with reference to FIGS. 1 to 10. The hydrogen production system 10 includes cell stacks 91, 92, 93 and a control unit 14. The hydrogen production system 10 according to this embodiment includes three cell stacks 91, 92, and 93. The cell stacks 91, 92, and 93 electrolyze water using supplied power to produce hydrogen. The control unit 14 controls at least one specific cell stack of the cell stacks 91, 92, and 93. The control unit 14 selectively executes a load adjustment control and an ON/OFF control for the power supplied to a specific cell stack based on the amount of hydrogen production required for the entirety of the cell stacks 91, 92, and 93. The load adjustment control adjusts the voltage or current of the power supplied to a specific cell stack. The ON/OFF control is to turn on or off the power supplied to a specific cell stack.

As shown in FIG. 1, the hydrogen production system 10 includes a power source 15, a control unit 14, and three cell stacks 91, 92, and 93. The power source 15 is connected in parallel with the three cell stacks 91, 92, and 93. A switching element 16 and a variable resistor 17 are connected in series, between the power source 15 and the cell stack 91, 92, 93. The order in which the switching element 16 and the variable resistor 17 are connected is not particularly limited. The control unit 14 turns ON or OFF the switching element 16. The switching element 16 can be a mechanical relay, a semiconductor switching element, and the like. The control unit 14 changes the electric resistance value of the variable resistor 17. As a result, the control unit 14 changes the voltage or current of the power supplied to the three cell stacks 91, 92, and 93. The means for changing the voltage or current of the power supplied to the three cell stacks 91, 92, and 93 is not limited to the variable resistor 17, and any appropriate element can be selected.

The three cell stacks 91, 92, and 93 are referred to as a first cell stack 91, a second cell stack 92, and a third cell stack 93. The first cell stack 91, the second cell stack 92, and the third cell stack 93 may have the same configuration, or may have different configurations. In this embodiment, the first cell stack 91, the second cell stack 92 and the third cell stack 93 have the same configuration.

The first cell stack 91 includes an anode 18, a cathode 19, and an electrolyte 20 disposed between the anode 18 and the cathode 19. The electrolyte 20 in this embodiment is a solid oxide electrolyte. The first cell stack 91 of this embodiment is configured by stacking flat solid oxide electrolysis cells in the thickness direction. At the anode 18, water vapor is reduced to produce hydrogen and oxygen ions. The electrolyte 20 transports the generated oxygen ions to the cathode 19. At the cathode 19, the transported oxygen ions are oxidized to produce oxygen.

Water vapor is supplied to the first cell stack 91 from a water vapor line 21. The water vapor is generated by vaporizing water using a water evaporator (not shown). In addition, air is supplied to the first cell stack 91 from an air supply line 22. The air is compressed to have a predetermined pressure by a compressor (not shown).

A hydrogen line 23 is connected to the first cell stack 91. Hydrogen produced in the first cell stack 91 flows through the hydrogen line 23. The hydrogen line 23 is connected to a hydrogen utilization device 24. The hydrogen circulated through the hydrogen line 23 is supplied to the hydrogen utilization device 24 and utilized in the hydrogen utilization device 24. The hydrogen utilization device 24 is adapted to utilize hydrogen in any manner. The hydrogen utilization device 24 can, for example, produce products using hydrogen as a raw material, or process products in a reducing atmosphere using hydrogen. The hydrogen utilization device 24 sends a signal to the control unit 14 regarding the amount of hydrogen required by the hydrogen utilization device 24.

The control unit 14 receives the signal transmitted from the hydrogen utilization device 24 and calculates the overall load adjustment rate. The overall load adjustment rate is defined as a percentage of the amount of hydrogen production required from the hydrogen utilization device 24 relative to the maximum value of the overall hydrogen production capacity by the entirety of the cell stacks, as follows.

Overall load adjustment rate = {(Amount of hydrogen production required from the hydrogen utilization device) / (Maximum value of Overall hydrogen production capacity by Entirety of cell stacks)} x 100 (%)

An air exhaust line 25 is connected to the first cell stack 91. The air supplied to the first cell stack 91 and the oxygen generated in the first cell stack 91 are allowed to flow through the air exhaust line 25. The air and oxygen circulated through the air exhaust line 25 are exhausted to the outside.

As described above, the second cell stack 92 and the third cell stack 93 have the same configuration as the first cell stack 91, so the same members are given the same reference numerals and duplicated explanations will be omitted.

In this embodiment, the control unit 14 controls the power supplied to the first cell stack 91, the second cell stack 92, and the third cell stack 93. In this embodiment, the first cell stack 91, the second cell stack 92 and the third cell stack 93 included in the hydrogen production system 10 are all designated as specific cell stack controlled by the control unit 14. Among the multiple cell stacks 91, 92, and 93 included in the hydrogen production system 10, one or more cell stacks may be designated as specific cell stack.

2. Control of Specific cell stack

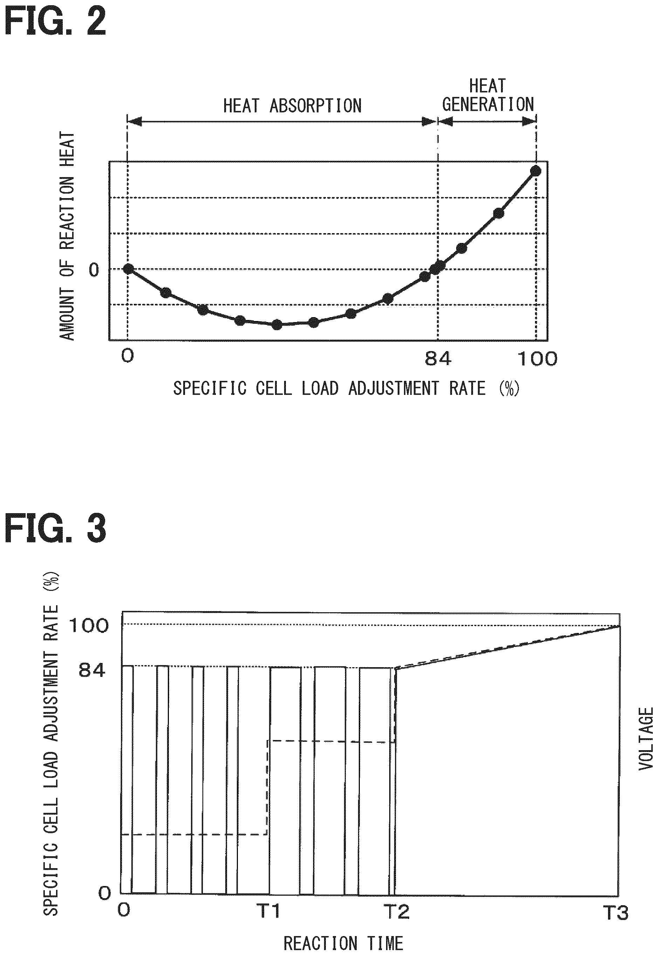

The control of the first cell stack 91, the second cell stack 92, and the third cell stack 93 by the control unit 14 will be described with reference to FIGS. 2 to 4.

FIG. 2 shows a graph illustrating a change in the amount of reaction heat in the first cell stack 91 versus the specific cell load adjustment rate. As described above, in this embodiment, the first cell stack 91, the second cell stack 92 and the third cell stack 93 are all considered to be specific cell stack, so in the following explanation, the first cell stack 91 will be used as an example. Unless otherwise specified, the second cell stack 92 and the third cell stack 93 are similar to the first cell stack 91.

In the graph shown in FIG. 2, the vertical axis indicates the amount of reaction heat when the first cell stack 91 produces hydrogen.

In the graph shown in FIG. 2, the specific cell load adjustment rate on the horizontal axis is defined as a percentage of the hydrogen production amount required for the specific cell stack relative to the maximum value of the hydrogen production capacity of the specific cell stack, as follows.

Specific cell load adjustment rate = {(Amount of hydrogen production required for the specific cell stack) / (Maximum value of Hydrogen production capacity by the specific cell stack)} x 100 (%)

The specific cell load adjustment rate can change when the amount of hydrogen production required by the hydrogen utilization device 24 changes. Furthermore, the specific cell load adjustment rate may change, even if the hydrogen production amount requested by the hydrogen utilization device 24 does not change, when the hydrogen production amount allocated to the specific cell stack by the control unit 14 changes. In this manner, the specific cell load adjustment rate can be arbitrarily changed between 0% and 100% while the hydrogen production system 10 is in operation.

A case where the hydrogen production amount allocated to a specific cell stack by the control unit 14 is changed will be described. The amount of hydrogen production required for a specific cell stack refers to the amount of hydrogen production allocated to one cell stack, out of the total amount of hydrogen production required for the entirety of the cell stacks 91, 92, and 93. For example, the maximum value of the hydrogen production capacity of the first cell stack 91, the second cell stack 92, and the third cell stack 93 as a whole is set to 100%. If the hydrogen production mount of 60% is required for the first cell stack 91, the second cell stack 92, and the third cell stack 93 as a whole, 20% may be allocated each to the first cell stack 91, the second cell stack 92, and the third cell stack 93. Alternatively, 10% may be allocated to the first cell stack 91, 20% to the second cell stack 92, and 30% to the third cell stack 93. The hydrogen production amount may be allocated in any proportion.

Next, the relationship between the overall load adjustment rate and the specific cell load adjustment rate will be described. The hydrogen production system 10 of this embodiment includes three cell stacks 91, 92, and 93, that is, the first cell stack 91, the second cell stack 92, and the third cell stack 93, which have the same configuration. For example, when a specific cell load adjustment rate is assigned to the first cell stack 91, the specific cell load adjustment rate is converted into an overall load adjustment rate by dividing the specific cell load adjustment rate by the number of cell stacks in the hydrogen production system 10, as follows.

Overall load adjustment rate = Specific cell load adjustment rate / the number of cell stacks

For example, if the control unit 14 assigns a specific cell load adjustment rate of 100% to the first cell stack 91, the value obtained by dividing this specific cell load adjustment rate of 100% by the number of cell stacks, that is 3, is converted into an overall load adjustment rate, as follows. In this specification, infinitesimals are rounded off to one decimal place, and the same applies hereinafter.

$$100\ (\%) / 3 \approx 33.3\ (\%)$$

When the control unit 14 assigns a specific cell load adjustment rate of 84% to the first cell stack 91, this specific cell load adjustment rate of 84% divided by the number of cell stacks, that is 3, is converted into an overall load adjustment rate of 28%.

If the multiple cell stacks do not have the same structure, when converting from a specific cell load adjustment rate to an overall load adjustment rate, the number of cell stacks may be combined with a coefficient corresponding to the individual structure of the cell stack.

Next, the graph shown in FIG. 2 will be described. When the specific cell load adjustment rate is 0%, the first cell stack 91 is not in operation. Therefore, since no reaction heat is generated in the first cell stack 91, the amount of reaction heat is zero.

Since the electrolysis of water is an endothermic reaction, when the specific cell load adjustment rate increases, the amount of reaction heat in the first cell stack 91 becomes a negative value. Therefore, in order to maintain the first cell stack 91 at a predetermined reaction temperature, the first cell stack 91 needs to be heated.

When the specific cell load adjustment rate increases, the heat generated by the ohmic loss in the first cell stack 91 exceeds the heat absorption, and the amount of reaction heat in the first cell stack 91 begins to increase. Then, the endothermic and exothermic reactions are balanced, and the amount of reaction heat becomes zero. In this embodiment, when the specific cell load adjustment rate is 84%, heat absorption and heat generation are balanced. However, the specific cell load adjustment rate when heat absorption and heat generation are balanced is not limited to 84% and may be any value. The value of the specific cell load adjustment rate at which the first cell stack 91 can produce hydrogen in a state where heat absorption and heat generation are balanced is set as a balance threshold value. In the present embodiment, the balance threshold value is set to 84%.

The state where heat absorption and heat generation are balanced is sometimes called a thermal neutral point. At the thermal neutral point, the first cell stack 91 neither generates nor absorbs heat, so the temperature of the first cell stack 91 can be maintained without newly inputting energy.

When the specific cell load adjustment rate exceeds 84%, the heat generated by the ohmic loss in the first cell stack 91 exceeds the heat absorbed, and the amount of reaction heat becomes a positive value. That is, as hydrogen is produced, the temperature of the first cell stack 91 increases. In the heat generating region, less energy is required to maintain the first cell stack 91 at a predetermined temperature, so hydrogen can be produced with high efficiency.

Next, the load adjustment control and the ON/OFF control will be described with reference to FIG. 3. The vertical axis on the left side of the graph shown in FIG. 3 indicates a specific cell load adjustment rate. The vertical axis on the right side of the graph indicates the voltage applied to the first cell stack 91. The horizontal axis of the graph indicates the reaction time when the first cell stack 91 produces hydrogen. In the graph, the solid line indicates the voltage applied to the first cell stack 91. In the graph, the dashed line indicates the specific cell load adjustment rate assigned to the first cell stack 91.

The control unit 14 executes ON/OFF control on the first cell stack 91 while the reaction time is between 0 and T2, and executes load adjustment control on the first cell stack 91 while the reaction time is between T2 and T3.

In the ON/OFF control, the control unit 14 turns on or off the switching element 16 connected to the first cell stack 91 to supply or stop the supply of power to the first cell stack 91. This enables the control unit 14 to supply power to the first cell stack 91 intermittently. The control unit 14 adjusts the time for which power is supplied to the first cell stack 91 by repeatedly turning the switching element 16 ON or OFF. As a result, when the reaction time is between 0 and T2, power corresponding to the specific load adjustment rate for the first cell stack 91 is supplied to the first cell stack 91.

The specific cell load adjustment rate when the reaction time is from 0 to T1 is smaller than the specific cell load adjustment rate when the reaction time is from T1 to T2. Therefore, the time during which the control unit 14 supplies power to the first cell stack 91 when the reaction time is from 0 to T1 is shorter than the time during which the control unit 14 supplies power to the first cell stack 91 when the reaction time is from T1 to T2.

The time for which the control unit 14 supplies power to the first cell stack 91 may be in units of, for example, microseconds, seconds, minutes, or hours, and the switching element 16 can be turned ON or OFF at any time interval.

When the control unit 14 executes ON/OFF control for the first cell stack 91, the control unit 14 changes the voltage applied to or the current flowing through the first cell stack 91 by adjusting the electrical resistance value of the variable resistor 17. In this embodiment, when ON/OFF control is executed for the first cell stack 91, a voltage is applied to the first cell stack 91 or a current is passed therethrough such that the specific cell load adjustment rate becomes the balance threshold value of 84%. As a result, when the first cell stack 91 is turned on, heat absorption and heat generation are balanced, making it possible to generate hydrogen efficiently.

In this embodiment, the specific cell load adjustment rate assigned to the first cell stack 91 changes stepwise as the reaction time ranges from 0 to T2, but not limited to this and the specific cell load adjustment rate may change continuously.

During the reaction time period from T2 to T3, the control unit 14 executes load adjustment control on the first cell stack 91. The control unit 14 turns on the switching element 16 connected to the first cell stack 91. The control unit 14 changes the voltage applied to or the current flowing through the first cell stack 91 by adjusting the variable resistor 17 connected to the first cell stack 91. As a result, the control unit 14 applies a voltage corresponding to the specific cell load adjustment rate assigned to the first cell stack 91 to the first cell stack 91, or causes a current corresponding to the specific cell load adjustment rate to flow through the first cell stack 91.

In this embodiment, the specific cell load adjustment rate assigned to the first cell stack 91 changes continuously during the reaction time from T2 to T3, but not limited to this, and the specific cell load adjustment rate may also change stepwise.

3. Control of Hydrogen production system 10

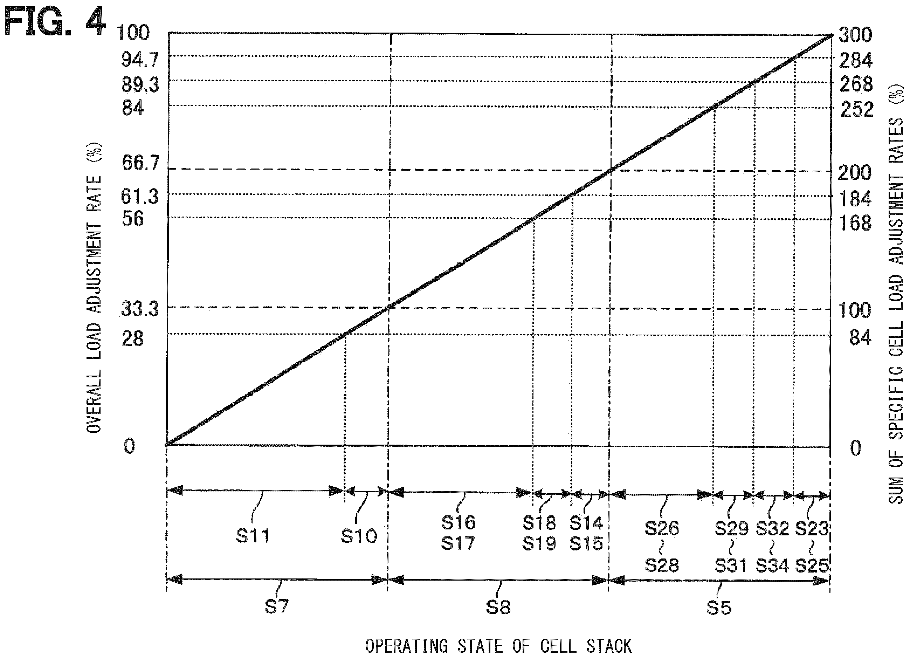

Next, the control of the hydrogen production system 10 will be described with reference to FIGS. 4 to 9. The control of the hydrogen production system 10 is not limited to the following description.

3-1. Summary

FIG. 4 is an explanatory diagram that shows a schematic example of the operating state of the first to third cell stacks 91, 92, and 93 when the overall load adjustment rate changes.

In FIG. 4, the vertical axis on the left side indicates the overall load adjustment rate. The vertical axis on the right side indicates the sum of the specific cell load adjustment rates of the first cell stack 91, the second cell stack 92, and the third cell stack 93. The horizontal axis describes the operating state of the cell stack. The solid line in FIG. 4 schematically shows a state in which the overall load adjustment rate changes.

On the left vertical axis, an overall load adjustment rate of 0% indicates that the hydrogen utilization device 24 is not requesting the first cell stack 91, the second cell stack 92, and the third cell stack 93 as a whole to produce hydrogen. On the other hand, an overall load adjustment rate of 100% indicates that the hydrogen utilization device 24 is requesting that hydrogen be produced at the maximum hydrogen production capacity of the first cell stack 91, the second cell stack 92, and the third cell stack 93 as a whole.

An overall load adjustment rate of 33.3% indicates that the hydrogen utilization device 24 is requesting that the first cell stack 91, the second cell stack 92, and the third cell stack 93, as a whole, to produce hydrogen at the maximum hydrogen production capacity of one cell stack. When the overall load adjustment rate shown on the left vertical axis corresponds to 33.3%, the specific cell load adjustment rate shown on the right vertical axis is 100%, which represents an example in which the first cell stack 91 is producing hydrogen at its maximum hydrogen production capacity, and the second cell stack 92 and the third cell stack 93 are not producing hydrogen. The state in which the second cell stack 92 and the third cell stack 93 are not producing hydrogen refers to a state in which power is not being supplied to at least the second cell stack 92 and the third cell stack 93. A state in which power is not supplied to the second cell stack 92 and the third cell stack 93 includes, for example, a state in which the switching element 16 connected to the second cell stack 92 and the third cell stack 93 is turned off by the control unit 14.

Similarly, an overall load adjustment rate of 66.7% indicates that the hydrogen utilization device 24 is requesting the first cell stack 91, the second cell stack 92, and the third cell stack 93 to produce hydrogen at the maximum hydrogen production capacity of two cell stacks. When the overall load adjustment rate shown on the left vertical axis corresponds to 66.7%, the value of the specific cell load adjustment rate shown on the right vertical axis is 200%, which represents an example in which the first cell stack 91 and the second cell stack 92 are producing hydrogen at their maximum hydrogen production capacity, and the third cell stack 93 is not producing hydrogen. The state in which the third cell stack 93 is not producing hydrogen refers to a state in which at least the third cell stack 93 is not being supplied with power. The state in which no power is supplied to the third cell stack 93 includes, for example, a case in which the control unit 14 has turned off the switching element 16 connected to the third cell stack 93.

In this embodiment, as described above, when the overall load adjustment rate is 0 to 33.3%, a single-unit operation state is achieved in which only the first cell stack 91 is in operation. When the overall load adjustment rate is 33.3 to 66.7%, a two-unit operation state is achieved in which the first cell stack 91 and the second cell stack 92 are in operation. When the overall load adjustment rate is 66.7 to 100%, a three-unit operation state is achieved in which the first cell stack 91, the second cell stack 92, and the third cell stack 93 are in operation.

3-2. Main routine

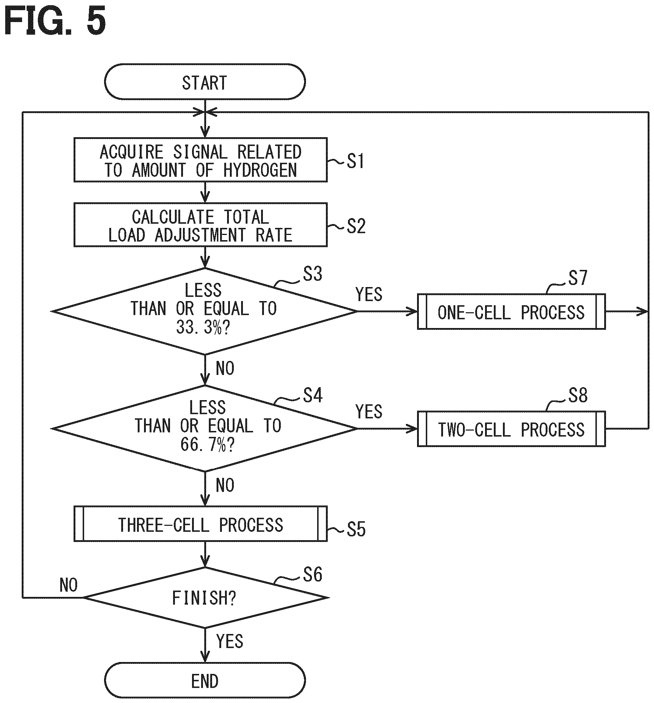

As shown in FIG. 5, when the hydrogen production system 10 starts producing hydrogen, the control unit 14 acquires a signal related to the amount of hydrogen required by the hydrogen utilization device 24 from the hydrogen utilization device 24 (S1). The control unit 14 calculates the total load adjustment rate required for the first cell stack 91, the second cell stack 92, and the third cell stack 93 as a whole, based on the signal obtained from the hydrogen utilization device 24 (S2).

When the overall load adjustment rate is equal to or less than 33.3% (S3: Y), the control unit 14 executes the one-cell process to operate the first cell stack 91 (S7). When the control unit 14 determines that the total load operating rate is not 33.3% or less (S3: N), it is determined whether the overall load adjustment rate is 66.7% or less (S4). If the overall load adjustment rate is 66.7% or less (S4: Y), the control unit 14 executes a two-cell process in which the first cell stack 91 and the second cell stack 92 are operated (S8). When the control unit 14 determines that the total load operating rate is not 66.7% or less (S4: N), a three-cell process is executed (S5) in which the first cell stack 91, the second cell stack 92, and the third cell stack 93 are operated. The control unit 14 repeats the above process until receiving an instruction to finish the production of hydrogen (S6: N). When the control unit 14 receives an instruction to finish the production of hydrogen (S6: Y), the processing for the hydrogen production system 10 is ended.

3-3. One-cell process

The one-cell process (S7) will be described with reference to FIGS. 4 to 6. When the overall load adjustment rate is determined to be 33.3% or less in S3 of FIG. 5, the one-cell process is executed, in which the first cell stack 91 is in operation, and the second cell stack 92 and the third cell stack 93 are not in operation. The control unit 14 determines whether the overall load adjustment rate is less than 28% (S9). As shown in FIG. 4, the overall load adjustment rate of 28% indicates that a specific cell load adjustment rate allocated to the first cell stack 91 is 84%. The specific cell load adjustment rate of the first cell stack 91 being 84% indicates that the heat absorption and heat generation are in a balanced state when the first cell stack 91 produces hydrogen. The overall load adjustment rate of less than 28% indicates that the first cell stack 91 is in a state of producing hydrogen by absorbing heat. When the control unit 14 determines that the overall load adjustment rate is less than 28% (S9: Y), it causes the first cell stack 91 to execute ON/OFF control (S11). Thereafter, the control unit 14 returns to S1 and repeats the processes of S1 to S8 until an end instruction is received.

When the control unit 14 determines that the overall load adjustment rate is not less than 28% (S9: N), it causes the first cell stack 91 to execute the load adjustment control (S10). This makes it possible to reduce the number of times the power supplied to the first cell stack 91 is turned on or off, compared to when the power is controlled to be on/off all the time the first cell stack 91 is in operation. This makes it possible to suppress deterioration of the first cell. Thereafter, the control unit 14 returns to S1 and repeats the processes of S1 to S8 until an end instruction is received.

In this embodiment, when the one-cell process is performed, the first cell stack 91 is controlled to perform ON/OFF control, and the second cell stack 92 and the third cell stack 93 are not operated, but not limited to the above. For example, the degree of deterioration of the first to third cell stacks 93 may be detected, and the cell stack that is relatively less deteriorated may be made to execute ON/OFF control.

3-4. Two-cell process

The two-cell process (S8) will be described with reference to FIGS. 4, 5 and 7. When the overall load adjustment rate is determined to be 66.7% or less in S4 of FIG. 5, the two-cell process is executed, in which the first cell stack 91 and the second cell stack 92 are in operation, and the third cell stack 93 is not in operation. The control unit 14 determines whether the overall load adjustment rate is less than 56% (S12). As shown in FIG. 4, the overall load adjustment rate of 56% means that the sum of specific cell load adjustment rates is 168%. In other words, both the specific cell load adjustment rate of the first cell stack 91 and the load adjustment rate of the second cell stack 92 are 84%. In other words, this indicates that when the first cell stack 91 and the second cell stack 92 produce hydrogen, the heat absorption and heat generation are in a balanced state. The overall load adjustment rate being less than 56% indicates that the first cell stack 91 and the second cell stack 92 are in an endothermic state and producing hydrogen. When the control unit 14 determines that the overall load adjustment rate is less than 56% (S12: Y), it causes the first cell stack 91 to execute ON/OFF control (S16) and operates the second cell stack 92 at the overall load adjustment rate of 28% (S17). As shown in FIG. 4, the overall load adjustment rate of 28% is converted into a specific cell load adjustment rate of the second cell stack 92 of 84%. That is, the second cell stack 92 is in a state of producing hydrogen in a state where the heat absorption and heat generation are balanced. Thereafter, the control unit 14 returns to S1 and repeats the processes of S1 to S8 until an end instruction is received.

When the control unit 14 determines that the overall load adjustment rate is not less than 56% (S12: N), the control unit 14 determines whether or not the overall load adjustment rate is less than 61.3% (S13). As shown in FIG. 4, the overall load adjustment rate of 61.3% means that the sum of specific cell load adjustment rates is 184%. In other words, the specific cell load adjustment rate of the first cell stack 91 is 100%, and the load adjustment rate of the second cell stack 92 is 84%. This indicates that the first cell stack 91 is in a state of producing hydrogen in a heat generating state, and that when the second cell stack 92 produces hydrogen, the heat absorption and heat generation are in a balanced state. The overall load adjustment rate of less than 61.3% indicates that the first cell stack 91 is in a state of producing hydrogen in a heat generating state, and the second cell stack 92 is in a state of producing hydrogen in a state where heat absorption and heat generation are balanced. When the control unit 14 determines that the overall load adjustment rate is less than 61.3% (S13: Y), it causes the first cell stack 91 to execute load adjustment control (S18). This makes it possible to reduce the number of times the power supplied to the first cell stack 91 is turned on or off, compared to when the power is controlled to be on/off all the time the first cell stack 91 is in operation. This makes it possible to suppress deterioration of the first cell. The control unit 14 operates the second cell stack 92 at the overall load adjustment rate of 28% (S19). The overall load adjustment rate of 28% is converted into a specific cell load adjustment rate of the second cell stack 92 of 84%. That is, the second cell is in a state of producing hydrogen in a state where heat absorption and heat generation are balanced. Thereafter, the control unit 14 returns to S1 and repeats the processes of S1 to S8 until an end instruction is received.

When the control unit 14 determines that the overall load adjustment rate is not less than 61.3% (S13: N), the control unit 14 operates the first cell stack 91 at the overall load adjustment rate of 33.3% (S14). As shown in FIG. 4, the overall load adjustment rate of 33% is converted into a specific cell load adjustment rate of 100%. That is, the first cell stack 91 produces hydrogen at a specific cell load adjustment rate of 100%. The control unit 14 causes the second cell stack 92 to execute load adjustment control (S15). This makes it possible to reduce the number of times the power supplied to the second cell stack 92 is turned on or off, compared to when the power is controlled to be on/off all the time the second cell stack 92 is operating. This makes it possible to suppress deterioration of the second cell stack 92. Thereafter, the control unit 14 returns to S1 and repeats the processes of S1 to S8 until an end instruction is received.

In this embodiment, in the two-cell process, the first cell stack 91 is configured to be ON/OFF controlled, but is not limited to this. For example, a cell stack for which ON/OFF control was not performed in the one-cell process, such as the second cell stack 92 or the third cell stack 93, may be subjected to ON/OFF control. Also, the degree of deterioration of the first to third cell stacks 93 may be detected, and the cell stack that is relatively less deteriorated may be made to execute ON/OFF control.

3-5. Three-cell process

The three-cell process (S8) will be described with reference to FIGS. 4, 5, and 8. When it is determined in S4 of FIG. 5 that the overall load adjustment rate is not equal to or less than 66.7%, the three-cell process is executed, such that the first cell stack 91, the second cell stack 92, and the third cell stack 93 are put into operation. The control unit 14 determines whether the overall load adjustment rate is less than 84% (S20). As shown in FIG. 4, the overall load adjustment rate of 84% means that the sum of specific cell load adjustment rates is 252%. In other words, the specific cell load adjustment rate of the first cell stack 91, the specific cell load adjustment rate of the second cell stack 92, and the specific cell load adjustment rate of the third cell stack 93 are 84%. In other words, this indicates that when the first cell stack 91, the second cell stack 92, and the third cell stack 93 produce hydrogen, the heat absorption and heat generation are in a balanced state. The overall load adjustment rate being less than 84% indicates that the first cell stack 91, the second cell stack 92, and the third cell stack 93 are in an endothermic state and producing hydrogen. When the control unit 14 determines that the overall load adjustment rate is less than 84% (S20: Y), it causes the first cell stack 91 to execute ON/OFF control (S26), operates the second cell stack 92 at the overall load adjustment rate of 28% (S27), and operates the third cell stack 93 at the overall load adjustment rate of 28% (S28). The overall load adjustment rate of 28% is converted into a specific cell load adjustment rate of the second cell stack 92 and a specific cell load adjustment rate of the third cell stack 93 of 84%. That is, the second cell stack 92 and the third cell stack 93 are in a state of producing hydrogen in a state where the heat absorption and heat generation are balanced. Thereafter, the control unit 14 returns to S1 and repeats the processes of S1 to S8 until an end instruction is received.

When the control unit 14 determines that the overall load adjustment rate is not less than 84% (S20: N), the control unit 14 determines whether or not the overall load adjustment rate is less than 89.3% (S21). As shown in FIG. 4, the overall load adjustment rate of 89.3% means that the sum of specific cell load adjustment rates is 268%. In other words, the specific cell load adjustment rate of the first cell stack 91 is 100%, and the load adjustment rate of the second cell stack 92 and the load adjustment rate of the third cell stack 93 are both 84%. This indicates that the first cell stack 91 is in a state of producing hydrogen while generating heat, and that when the second cell stack 92 and the third cell stack 93 produce hydrogen, the heat absorption and heat generation are in a balanced state. The overall load adjustment rate of less than 89.3% indicates that the first cell stack 91 is in a state of producing hydrogen through a heat generating state, and the second cell stack 92 and the third cell stack 93 are in a state of producing hydrogen through a balanced heat absorption and generation. When the control unit 14 determines that the overall load adjustment rate is less than 89.3% (S21: Y), it causes the first cell stack 91 to execute load adjustment control (S29). This makes it possible to reduce the number of times the power supplied to the first cell stack 91 is turned on or off, compared to when the power is controlled to be on/off all the time the first cell stack 91 is in operation. This makes it possible to suppress deterioration of the first cell. The control unit 14 operates the second cell stack 92 at the overall load adjustment rate of 28% (S27), and operates the third cell stack 93 at the overall load adjustment rate of 28% (S28). The overall load adjustment rate of 28% is converted into a specific cell load adjustment rate of the second cell stack 92 and a specific cell load adjustment rate of the third cell stack 93 of 84%. That is, the second cell stack 92 and the third cell stack 93 are in a state of producing hydrogen in a state where the heat absorption and heat generation are balanced. Thereafter, the control unit 14 returns to S1 and repeats the processes of S1 to S8 until an end instruction is received.

When the control unit 14 determines that the overall load adjustment rate is not less than 89.3% (S21: N), the control unit 14 determines whether or not the overall load adjustment rate is less than 94.7% (S22). As shown in FIG. 4, the overall load adjustment rate of 94.7% means that the sum of specific cell load adjustment rates is 284%. In other words, the specific cell load adjustment rate of the first cell stack 91 and the specific cell load adjustment rate of the second cell stack 92 are 100%, and the load adjustment rate of the third cell stack 93 is 84%. This indicates that the first cell stack 91 and the second cell stack 92 are in a state of producing hydrogen in a heat-generating state, and that when the third cell stack 93 produces hydrogen, the heat absorption and heat generation are in a balanced state. The fact that the overall load adjustment rate is less than 94.7% indicates that the first cell stack 91 and the second cell stack 92 are in a state of producing hydrogen by generating heat, and the third cell stack 93 is in a state of producing hydrogen in a state where heat absorption and heat generation are balanced. When the control unit 14 determines that the overall load adjustment rate is less than 94.7% (S22: Y), it operates the first cell stack 91 at the overall load adjustment rate of 33.3% (S32). In the example shown in FIG. 4, the overall load adjustment rate of 33.3% is converted into a specific cell load adjustment rate of the first cell stack 91 of 100%. That is, the first cell stack 91 produces hydrogen at a specific cell load adjustment rate of 100%. The control unit 14 causes the second cell stack 92 to execute load adjustment control (S33). This makes it possible to reduce the number of times the power supplied to the second cell stack 92 is turned on or off, compared to when the power is constantly controlled to be on or off while the second cell stack 92 is in operation. This makes it possible to suppress deterioration of the second cell stack 92. The control unit 14 operates the third cell stack 93 at the overall load adjustment rate of 28% (S34). The overall load adjustment rate of 28% is converted into a specific cell load adjustment rate of the third cell stack 93 of 84%. That is, the third cell stack 93 is in a state of producing hydrogen in a state where heat absorption and heat generation are balanced. Thereafter, the control unit 14 returns to S1 and repeats the processes of S1 to S8 until an end instruction is received.

When the control unit 14 determines that the overall load adjustment rate is not less than 94.7% (S22: N), it operates the first cell stack 91 at an overall load adjustment rate of 33.3% (S23) and operates the second cell stack 92 at an overall load adjustment rate of 33.3% (S24). As shown in FIG. 4, the overall load adjustment rate of 33.3% is converted into a specific cell load adjustment rate of 100%. That is, the first cell stack 91 and the second cell stack 92 produce hydrogen at a specific cell load adjustment rate of 100%. The control unit 14 causes the third cell stack 93 to execute load adjustment control (S25). This makes it possible to reduce the number of times the power supplied to the third cell stack 93 is turned on or off, compared to when the power is constantly controlled to be on or off while the third cell stack 93 is in operation. This makes it possible to suppress deterioration of the third cell stack 93. Thereafter, the control unit 14 returns to S1 and repeats the processes of S1 to S8 until an end instruction is received. This completes the process for the hydrogen production system 10.

In this embodiment, the first cell stack 91 is configured to be ON/OFF controlled in the three-cell process, but is not limited to this. For example, a cell stack, such as the second cell stack 92 or the third cell stack 93, for which the ON/OFF control was not performed in the one-cell process and the two-cell process may be subjected to the ON/OFF control. Also, the degree of deterioration of the first to third cell stacks 93 may be detected, and the cell stack that is relatively less deteriorated may be made to execute ON/OFF control.

For example, the first cell stack 91 may be ON/OFF controlled in the one-cell process. In the two-cell process, the second cell stack 92 may be ON/OFF controlled. In the three-cell process, the third cell stack 93 may be ON/OFF controlled. This makes it possible to average out the number of times the first to third cell stacks 91, 92, 93 are turned on/off, and therefore makes it possible to average out the deterioration of the first to third cell stacks 91, 92, 93.

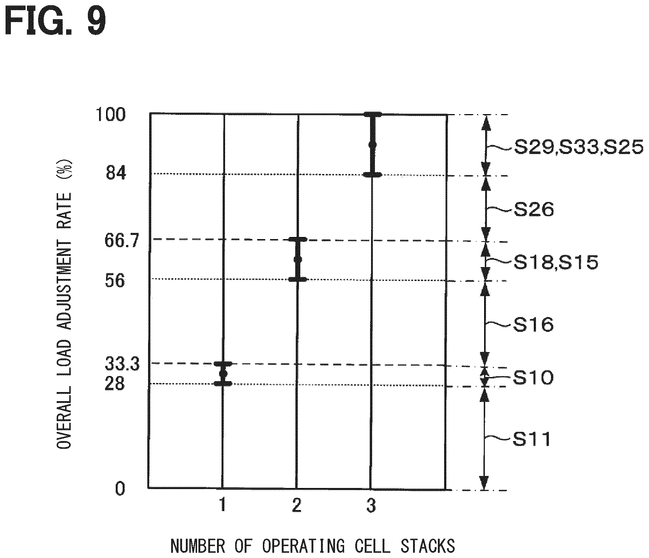

FIG. 9 shows a schematic diagram of a range in which the value of the overall load adjustment rate is set so that the control unit 14 executes the load adjustment control. In FIG. 9, the vertical axis represents the overall load adjustment rate. The horizontal axis indicates the number of cell stacks in operation. In the following, S10, S11, etc. in parentheses correspond to the processes shown in FIGS. 5 to 8.

When the overall load adjustment rate is between 0 and 33.3%, only the first cell stack 91 is in operation. The control unit 14 causes the first cell stack 91 to execute ON/OFF control when the overall load adjustment rate is between 0 and 28% (S11), and causes the first cell stack 91 to execute load adjustment control when the overall load adjustment rate is between 28 and 33.3% (S10).

When the overall load adjustment rate is between 33.3 and 66.7%, both the first cell stack 91 and the second cell stack 92 are in operation. When the overall load adjustment rate is between 33.3 and 56%, the control unit 14 causes the first cell stack 91 to execute ON/OFF control (S16), and when the overall load adjustment rate is between 56 and 66.7%, the control unit 14 causes the first cell stack 91 to execute load adjustment control (S18) or the second cell stack 92 to execute load adjustment control (S15).

When the overall load adjustment rate is between 66.7% and 100%, the first cell stack 91, the second cell stack 92, and the third cell stack 93 are in operation. When the overall load adjustment rate is between 66.7 and 84%, the control unit 14 causes the first cell stack 91 to execute ON/OFF control (S26). When the overall load adjustment rate is between 84 and 100%, the control unit 14 causes the first cell stack 91 to execute load adjustment control (S29), the second cell stack 92 to execute load adjustment control (S33), or the third cell stack 93 to execute load adjustment control (S25).

As described above, when the overall load adjustment rate is in the range of 28 to 33.3%, in the range of 56 to 66.7%, or in the range of 84 to 100%, the control unit 14 can execute load adjustment control on the first cell stack 91, the second cell stack 92, or the third cell stack 93, thereby reducing the number of times that the power supplied to the first cell stack 91, the second cell stack 92, and the third cell stack 93 is turned ON or OFF. This makes it possible to suppress deterioration of the first cell stack 91, the second cell stack 92 and the third cell stack 93.

4. One aspect of control of Hydrogen production system

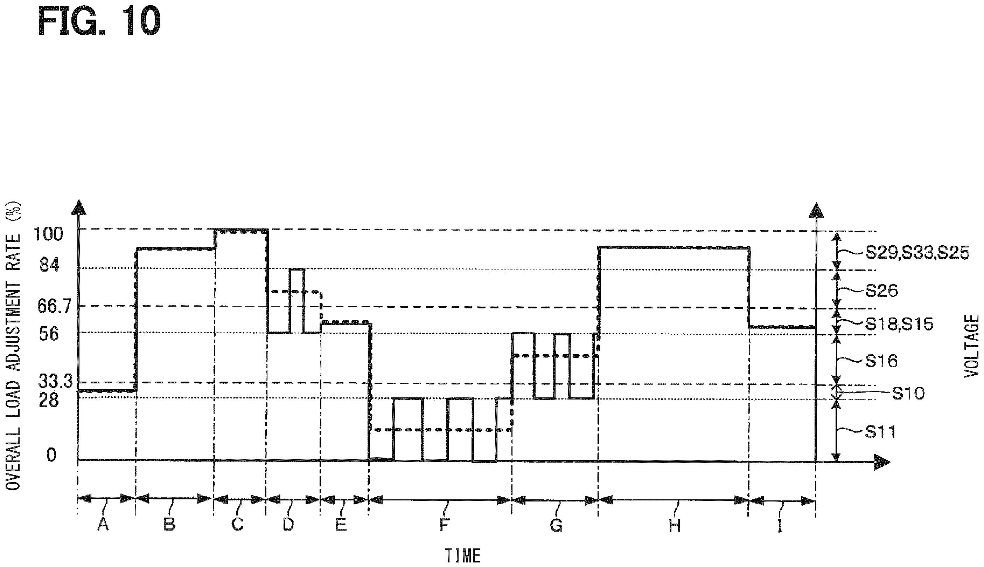

One aspect of the control of the hydrogen production system of this embodiment will be described with reference to FIG. 10. In FIG. 10, the vertical axis on the left side indicates the overall load adjustment rate, and the vertical axis on the right side indicates the voltages applied to the first to third cell stacks 91, 92, and 93. The horizontal axis of the graph indicates the reaction time when the first to third cell stacks 91, 92, and 93 generate hydrogen. In the graph of FIG. 10, the solid line indicates the voltage applied to any one of the first to third cell stacks 91, 92, and 93. The dashed line indicates the overall load adjustment rate based on the hydrogen production amount required for the first to third cell stacks 91, 92, and 93 as a whole.

In this embodiment, the overall load adjustment rate is changed stepwise with respect to the reaction time. However, the overall load adjustment rate may be changed continuously with respect to the reaction time.

In FIG. 10, the reaction time is divided into regions A to I. In each of the regions A to I, the amount of hydrogen production required for the entirety of the cell stacks 91, 92, and 93 is set. In each of the regions A to I, the control unit 14 executes the above-mentioned processes of S1 to S34. The following describes how the first, second and third cell stacks 91, 92 and 93 are controlled in each region.

In region A, the overall load adjustment rate is set to a value between 28% and 33.3%. The control unit 14 executes the one-cell process (S7). The control unit 14 causes the first cell stack 91 to execute ON/OFF control (S11).

In region B, the overall load adjustment rate is set to a value between 84% and 100%. The control unit 14 executes the three-cell process (S5). The control unit 14 causes the first cell stack to execute load adjustment control (S29), the second cell stack 92 to execute load adjustment control (S33), or the third cell stack to execute load adjustment control (S25).

In region C, the overall load adjustment rate is set to 100%. The control unit 14 executes the three-cell process (S5). The control unit 14 turns on the first cell stack 91 and the second cell stack 92 at the overall load adjustment rate of 33.3% (S23, S24). Furthermore, the control unit 14 causes the third cell stack 93 to execute load adjustment control and operate at an overall load adjustment rate of 33.3% (S25).

In region D, the overall load adjustment rate is set to a value between 66.7% and 84%. The control unit 14 executes the three-cell process (S5). The control unit 14 causes the first cell stack to execute ON/OFF control (S26), and turns on the second cell stack 92 and the third cell stack 93 at an overall load adjustment rate of 28% (S27, S28).

In region E, the overall load adjustment rate is between 56% and 66.7%. The control unit 14 executes the two-cell process (S18). The control unit 14 causes the first cell stack 91 to perform load adjustment control (S18) or the second cell stack 92 to perform load adjustment control (S15).

In region F, the overall load adjustment rate is set to a value between 0% and 28%. The control unit 14 executes the one-cell process (S7). The control unit 14 causes the first cell stack 91 to execute ON/OFF control (S11).

In region G, the overall load adjustment rate is set to a value between 33.3% and 56%. The control unit 14 executes the two-cell process (S8). The control unit 14 causes the first cell stack 91 to execute ON/OFF control (S16), and turns on the second cell stack 92 at an overall load adjustment rate of 28% (S17).

In region H, the overall load adjustment rate is set to a value between 84% and 100%. The control unit 14 executes the three-cell process (S5). The control unit 14 causes the first cell stack to execute load adjustment control (S29), the second cell stack 92 to execute load adjustment control (S33), or the third cell stack 93 to execute load adjustment control (S25).

In region I, the overall load adjustment rate is set to a value between 56% and 66.7%. The control unit 14 executes the two-cell process (S8). The control unit 14 controls the load adjustment of the first cell stack 91 (S18) or the load adjustment of the second cell stack 92 (S15).

5. Effects

Next, the effects of this embodiment will be described. The hydrogen production system 10 of this embodiment includes three cell stacks: the first cell stack 91, the second cell stack 92, and the third cell stack 93. In this embodiment, the first cell stack 91, the second cell stack 92 and the third cell stack 93 are all considered to be specific cell stack. As a result, based on the amount of hydrogen production required for the entirety of the first cell stack 91, the second cell stack 92, and the third cell stack 93, the control unit 14 is configured to selectively execute the load adjustment control to adjust the voltage or current of the power supplied to the first cell stack 91, the second cell stack 92, and the third cell stack 93, and the ON/OFF control to turn the power supplied to the first cell stack 91, the second cell stack 92, and the third cell stack 93 ON or OFF.

When any of the first cell stack 91, the second cell stack 92, and the third cell stack 93 is under the load adjustment control, the power is not repeatedly turned on and off to the cell stack under the load adjustment control. As a result, deterioration of the cell stack, which is subjected to load adjustment control, is suppressed. Therefore, the durability of the cell stack under load adjustment control is improved compared to a case where pulse width control is performed during the entire period in which hydrogen is produced. By improving the durability of at least the cell stack that is load-adjusted and controlled in this manner, the durability of the hydrogen production system 10 as a whole can be improved compared to a case in which all cell stacks are pulse-width controlled.

In this embodiment, the first cell stack 91, the second cell stack 92, and the third cell stack 93 are all considered to be specific cell stack, but not limited to this. For example, only the first cell stack 91 may be the specific cell stack. In this case, by subjecting at least the first cell stack 91 to load adjustment control, the durability of the first cell stack 91 can be improved. In this manner, in the hydrogen production system 10 equipped with the cell stacks, one or more of the cell stacks may be designated as specific cell stack, and the load adjustment control may be performed by the control unit 14.

In this embodiment, in the ON/OFF control, when the power is turned ON, the voltage or current applied to the first cell stack 91, the second cell stack 92, or the third cell stack 93 is set to a value that enables the first cell stack 91, the second cell stack 92, or the third cell stack 93 to produce hydrogen while maintaining a balance between heat absorption and heat generation.

When the heat absorption and the heat generation are in balance, the first cell stack 91, the second cell stack 92, or the third cell stack 93 can produce hydrogen without generating or absorbing heat. Therefore, even if the first cell stack 91, the second cell stack 92 or the third cell stack 93 is turned on, the temperature change of the first cell stack 91, the second cell stack 92 or the third cell stack 93 is small. This makes it possible to improve the durability of the first cell stack 91, the second cell stack 92, or the third cell stack 93.

The voltage or current at which hydrogen can be produced in a balanced state of heat absorption and heat generation can vary depending on, for example, the type, size, shape, electrical resistance value, number, etc. of the cell stacks in the hydrogen production system 10. In this embodiment, a voltage or current corresponding to a specific cell load adjustment rate of 84% is applied to the first cell stack 91, the second cell stack 92 or the third cell stack 93, but the numerical value of 84% may change, and the voltage or current corresponding to 84% may also change.

In this embodiment, the specific cell load adjustment rate is defined as a percentage of the amount of hydrogen production required for a specific cell stack relative to the maximum value of the hydrogen production capacity of the specific cell stack. At this time, the balance threshold value for the load adjustment rate is set to the value of the specific cell load adjustment rate at which the specific cell stack can produce hydrogen while heat absorption and heat generation are balanced. For a specific cell stack, the ON/OFF control is performed when the specific cell load adjustment rate is larger than or equal to 0% and smaller than the balance threshold value, and the load adjustment control is performed when the specific cell load adjustment rate is larger than or equal to the balance threshold value and smaller than or equal to 100%.

From the definition of the specific cell load adjustment rate, a load adjustment rate greater than the balance threshold value means that the amount of hydrogen production required for a specific cell stack is greater than the thermal neutral point where heat absorption and heat generation are balanced. In this case, when the specific cell load adjustment rate is larger than or equal to the balance threshold value and smaller than or equal to 100%, the specific cell stack operates in the heat generation region. In this way, the load of the specific cell stack operating in the exothermic reaction region is adjusted and controlled, so that the energy input to the specific cell stack can be reduced. As a result, hydrogen production efficiency can be improved compared to when the cell stack is subjected to load adjustment control in the endothermic reaction region.

Furthermore, the ON/OFF control is executed when the specific cell load adjustment rate is larger than or equal to 0% and smaller than the balance threshold value, and is not executed otherwise, so that the number of times a specific cell stack is turned ON or OFF can be reduced. This makes it possible to improve the durability of the specific cell stack.

In this embodiment, each of the first cell stack 91, the second cell stack 92, and the third cell stack 93 has the anode 18, the cathode 19, and the solid oxide electrolyte disposed between the anode 18 and the cathode 19, as the electrolyte 20.

A solid oxide electrolysis cell (SOEC) with a solid oxide electrolyte has a relatively difficult time keeping up with sudden changes in hydrogen production rate. By applying this embodiment to such a solid oxide water electrolysis device, it is possible to easily follow sudden changes in the amount of hydrogen produced when the first cell stack 91, the second cell stack 92, or the third cell stack 93 is controlled to be turned on/off. This makes it possible to improve the load following capability of the hydrogen production system 10 compared to a case in which all of the cell stacks are subjected to load adjustment control.

As described above, according to this embodiment, the durability of the hydrogen production system 10 can be improved.

Second Embodiment

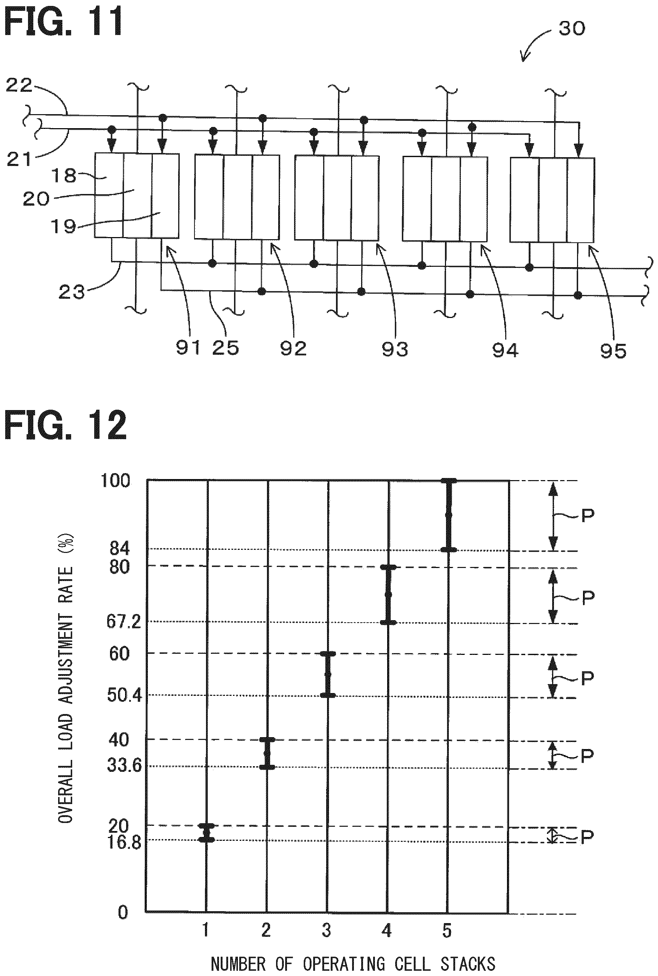

Next, a second embodiment will be described with reference to FIGS. 11 to 12. As shown in FIG. 11, a hydrogen production system 30 of this embodiment includes five cell stacks: a first cell stack 91, a second cell stack 92, a third cell stack 93, a fourth cell stack 94, and a fifth cell stack 95. The first cell stack 91, the second cell stack 92, the third cell stack 93, the fourth cell stack 94 and the fifth cell stack 95 have the same configuration. The configuration other than that described above is substantially the same as in the first embodiment, so the same components are given the same reference numerals and duplicated explanations are omitted.

FIG. 12 shows a schematic diagram of a range in which the value of the overall load adjustment rate is set so that the control unit 14 executes the load adjustment control.

In this embodiment, since the hydrogen production system 10 has five identical cell stacks 91, 92, 93, 94, and 95, the value of the specific cell load adjustment rate according to this embodiment can be converted into an overall load adjustment rate by dividing the value by 5. Therefore, as a balance threshold value at which heat absorption and heat generation are balanced, the overall load adjustment rate corresponding to a specific cell load adjustment rate of 84% is 16.8%. The value of the overall load adjustment rate corresponding to a specific cell load adjustment rate of 100% is 20%.

When the overall load adjustment rate is between 0 and 20%, only the first cell stack 91 is in operation. The control unit 14 causes the first cell stack 91 to execute ON/OFF control when the overall load adjustment rate is 0 to 16.8%, and causes the first cell stack 91 to execute load adjustment control when the overall load adjustment rate is 16.8 to 20%.

When the overall load adjustment rate is between 20% and 40%, both the first cell stack 91 and the second cell stack 92 are in operation. At this time, when the charge ratio is 33.6%, which is twice 16.8%, the first cell stack 91 and the second cell stack 92 produce hydrogen in a state where heat absorption and heat generation are balanced. Therefore, the control unit 14 performs load adjustment control on the first cell stack 91 or the second cell stack 92 when the overall load adjustment rate is between 33.6% and 40%.

Similarly, each time the overall load adjustment rate becomes a multiple of 20%, the number of operating cell stacks 91, 92, 93, 94, and 95 increases. Furthermore, in a region where the overall load adjustment rate is between a multiple of 16.8% and a multiple of 20%, any one of the multiple cell stacks 91, 92, 93, 94, and 95 is subjected to load adjustment control by the control unit 14. In FIG. 12, the range in which the load adjustment control is performed by the control unit 14 is indicated by the symbol P.

In this way, this aspect can be applied when the hydrogen control system has any number of cell stacks. Furthermore, as the number of cell stacks increases, the load adjustment control range expands, making it possible to produce hydrogen with high efficiency. Furthermore, since the number of times the power is turned on and off can be reduced, deterioration of the cell stack can be further suppressed.

Third Embodiment

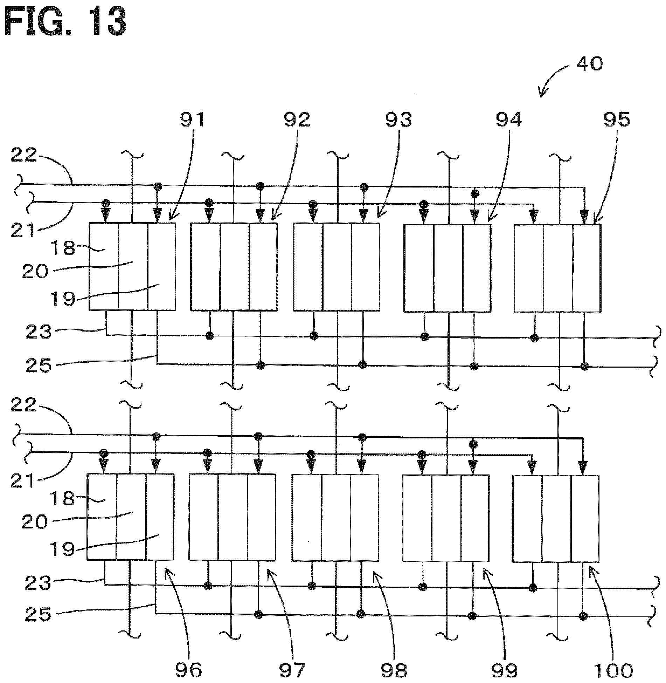

Next, a third embodiment will be described with reference to FIGS. 13 to 14. As shown in FIG. 13, a hydrogen production system 40 of this embodiment includes ten cell stacks, namely, first to tenth cell stacks 91, 92, 93, 94, 95, 96, 97, 98, 99, and 100. The first to tenth cell stacks 91, 92, 93, 94, 95, 96, 97, 98, 99, and 100 have the same configuration. The configuration other than that described above is substantially the same as in the first embodiment, so the same components are given the same reference numerals and duplicated explanations are omitted.

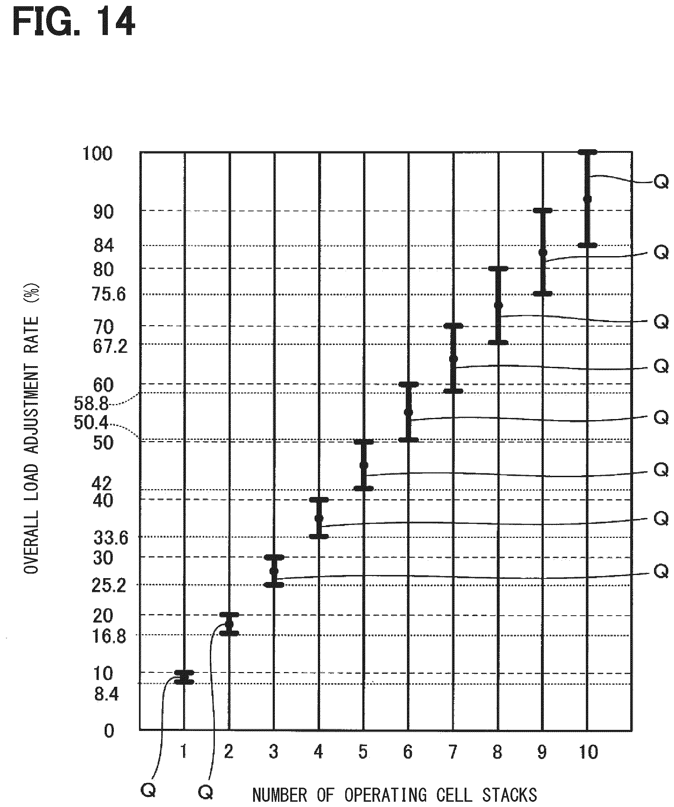

FIG. 14 shows a schematic diagram of a range in which the value of the overall load adjustment rate is set so that the control unit 14 executes the load adjustment control.

In this embodiment, since the hydrogen production system 10 has ten identical cell stacks 91, 92, 93, 94, 95, 96, 97, 98, 99, and 100, the value of the specific cell load adjustment rate in this embodiment can be converted into an overall load adjustment rate by dividing the value by 10. Therefore, as a balance threshold value at which heat absorption and heat generation are balanced, the overall load adjustment rate corresponding to a specific cell load adjustment rate of 84% is 8.4%. The value of the overall load adjustment rate corresponding to a specific cell load adjustment rate of 100% is 10%.

When the overall load adjustment rate is between 0 and 10%, only the first cell stack 91 is in operation. The control unit 14 causes the first cell stack 91 to execute ON/OFF control when the overall load adjustment rate is 0 to 8.4%, and causes the first cell stack 91 to execute load adjustment control when the overall load adjustment rate is 8.4 to 10%.

When the overall load adjustment rate is between 10% and 20%, both the first cell stack 91 and the second cell stack 92 are in operation. At this time, when the hydrogen concentration is 16.8%, which is twice 8.4%, the first cell stack 91 and the second cell stack 92 produce hydrogen in a state where the heat absorption and heat generation are balanced. Therefore, the control unit 14 performs load adjustment control on the first cell stack 91 or the second cell stack 92 when the overall load adjustment rate is between 16.8% and 20%.

Similarly, each time the overall load adjustment rate becomes a multiple of 10%, the number of operating cell stacks 91, 92, 93, 94, 95, 96, 97, 98, 99, and 100 increases. Furthermore, in a region where the overall load adjustment rate is between a multiple of 8.4% and a multiple of 10%, any one of the multiple cell stacks 91, 92, 93, 94, 95, 96, 97, 98, 99, and 100 is subjected to load adjustment control by the control unit 14. In FIG. 14, the range in which the load adjustment control is performed by the control unit 14 is indicated by the symbol Q.

In this way, this aspect can be applied when the hydrogen control system has any number of cell stacks. Furthermore, as the number of cell stacks increases, the load adjustment control range expands, making it possible to produce hydrogen with high efficiency. Furthermore, since the number of times the power is turned on and off can be reduced, deterioration of the cell stack can be further suppressed.

Fourth Embodiment

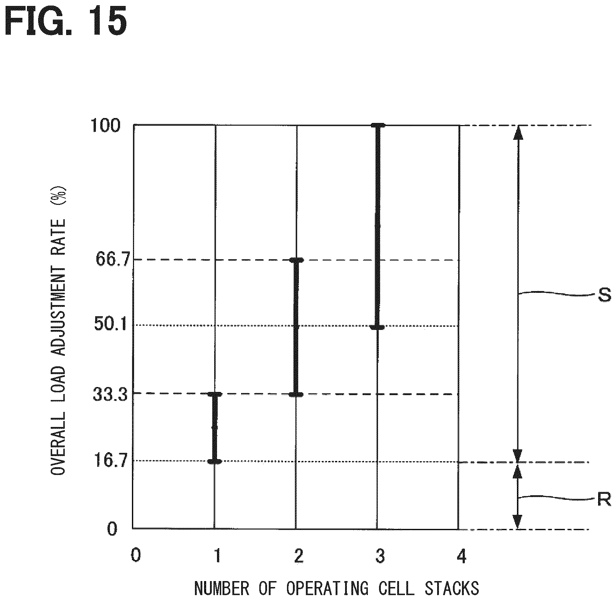

Next, a fourth embodiment will be described with reference to FIG. 15. In this embodiment, the ON/OFF control is performed when the specific cell load adjustment rate is larger than or equal to 0% and smaller than 50%. The load adjustment control is performed when the specific cell load adjustment rate is larger than or equal to 50% and smaller than or equal to 100%.

The configuration other than that described above is substantially the same as in the first embodiment, so the same components are given the same reference numerals and duplicated explanations are omitted.

FIG. 15 shows a schematic diagram of a range in which the value of the overall load adjustment rate is set so that the control unit 14 executes the load adjustment control.

In this embodiment, since the hydrogen production system 50 has three identical cell stacks 91, 92, and 93, the value of the specific cell load adjustment rate in this embodiment can be converted into an overall load adjustment rate by dividing the value by 3. Therefore, the overall load adjustment rate corresponding to a specific cell load adjustment rate of 50% is 16.7%. The value of the overall load adjustment rate corresponding to a specific cell load adjustment rate of 100% is 33.3%.

When the overall load adjustment rate is between 0 and 33.3%, only the first cell stack 91 is in operation. The control unit 14 causes the first cell stack 91 to execute ON/OFF control when the overall load adjustment rate is between 0 and 16.7%, and causes the first cell stack 91 to execute load adjustment control when the overall load adjustment rate is between 16.7 and 33.3%.

When the overall load adjustment rate is between 33.3 and 66.7%, both the first cell stack 91 and the second cell stack 92 are in operation. When the specific cell load adjustment rate of the first cell stack 91 is set to 50% and the specific cell load adjustment rate of the second cell stack 92 is set to 50%, the sum of the specific cell load adjustment rate of the first cell stack and the specific cell load adjustment rate of the second cell stack 92 is 100%. The specific cell load adjustment rate of 100% divided by the number of cell stacks, that is 3, is 33.3%, which is the corresponding overall load adjustment rate. That is, in this embodiment, when the overall load adjustment rate is between 33.3 and 66.7%, the control unit 14 causes both the first cell stack 91 and the second cell stack 92 to execute load adjustment control.

When the overall load adjustment rate is between 66.7% and 100%, the first cell stack 91, the second cell stack 92, and the third cell stack 93 are in operation. When the specific cell load adjustment rates of the first cell stack 91, the second cell stack 92, and the third cell stack 93 are set to 50%, the sum of the specific cell load adjustment rate of the first cell stack 91, the specific cell load adjustment rate of the second cell stack 92, and the specific cell load adjustment rate of the third cell stack 93 is 150%. The specific cell load adjustment rate of 150% is divided by the number of cell stacks, that is 3, to obtain 50%, which is the corresponding overall load adjustment rate. Since 66.7% is greater than 50%, in this embodiment, when the overall load adjustment rate is between 66.7 and 100%, the control unit 14 causes the first cell stack 91, the second cell stack 92 and the third cell stack 93 to execute load adjustment control.

In FIG. 15, the range in which the control unit 14 executes ON/OFF control is indicated by the symbol R, and the range in which the control unit 14 executes load adjustment control is indicated by the symbol S.

As described above, the thermal neutral point of the cell stack in the hydrogen production system 50 may vary depending on the type of cell stack, reaction temperature, etc., but in many cases, the thermal neutral point is within the range of 50% ≤ specific cell load adjustment rate ≤ 100%. Therefore, by performing load adjustment control near the thermal neutral point, it is possible to reduce the energy input to a particular cell stack, thereby enabling hydrogen to be produced efficiently.

Furthermore, since ON/OFF control is executed when 0% ≤ specific cell load adjustment rate < 50%, it is possible to reduce the number of times the specific cell stack is turned ON or OFF. This makes it possible to improve the durability of the specific cell stack. In this embodiment, when two or more cell stacks are in operation, all of the operating cell stacks are subjected to load adjustment control. This makes it possible to improve the durability of the hydrogen production system 10.

Fifth Embodiment

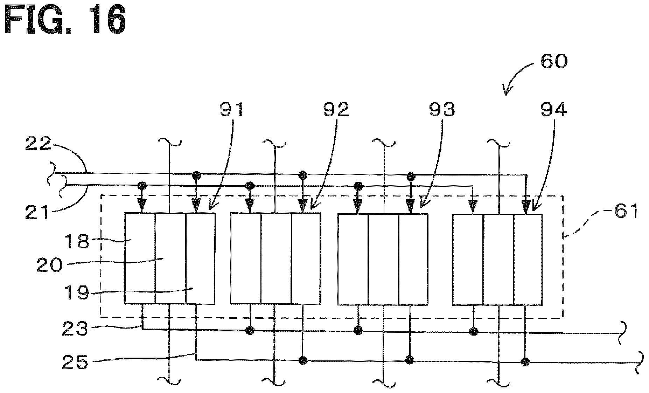

Next, a hydrogen production system 60 according to a fifth embodiment will be described with reference to FIG. 16. The hydrogen production system 10 of this embodiment includes an electrolysis module 61. The electrolysis module 61 includes the first to fourth cell stacks 94. The first to fourth cell stacks 94 are, for example, arranged on a single base member not shown, or arranged within a single housing not shown, and are configured to function as a single electrolysis module 61. The number of cell stacks included in the electrolysis module 61 may be one or two or more, and is not particularly limited.

In the electrolysis module 61 of this embodiment, the first to fourth cell stacks 94 are designated as specific cell stack. As a result, the control unit 14 selectively executes the load adjustment control and the ON/OFF control for each of the first to fourth cell stacks 94.

The configuration other than that described above is substantially the same as in the first embodiment, so the same components are given the same reference numerals and duplicated explanations are omitted.

By selectively executing the load adjustment control and the ON/OFF control for each of the cell stacks 91, 92, 93, and 94 included in the electrolysis module 61, the amount of heat generated and the amount of heat absorbed can be appropriately controlled for each of the cell stacks 91, 92, 93, and 94. This allows efficient thermal management for each of the cell stacks 91, 92, 93, and 94, and therefore allows efficient thermal management for each of the electrolysis modules 61 including the cell stacks 91, 92, 93, and 94. As a result, compared to the case where thermal management is performed individually for the cell stacks 91, 92, 93, and 94, the equipment for inputting energy into the electrolysis module 61 and the equipment for dissipating heat from the electrolysis module 61 can be simplified, thereby reducing the initial cost of the hydrogen production system 60.

Sixth Embodiment

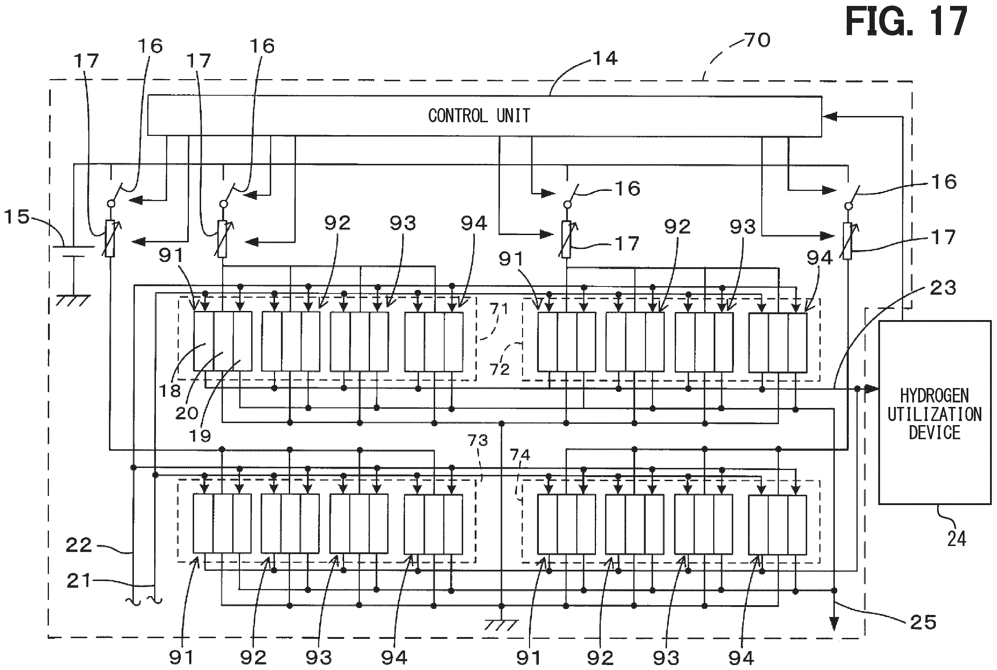

Next, a hydrogen production system 70 according to a sixth embodiment will be described with reference to FIG. 17. The hydrogen production system 10 of this embodiment includes plural electrolysis modules 71, 72, 73, and 74. In this embodiment, the hydrogen production system 10 includes four electrolysis modules, namely, the first to fourth electrolysis modules 71, 72, 73, and 74. The number of electrolysis modules 71, 72, 73, and 74 may be two, three, or five or more, and is not particularly limited. The number of cell stacks included in the electrolysis modules 71, 72, 73, and 74 may be one or two or more, and is not particularly limited. In this embodiment, each of the electrolysis modules 71, 72, 73, and 74 includes four cell stacks, namely, the first to fourth cell stacks 91, 92, 93, and 94.

In this embodiment, the power source 15 and the four electrolysis modules 71, 72, 73, and 74 are connected in parallel. Between the power source 15 and each of the electrolysis modules 71, 72, 73, and 74, a switching element 16 and a variable resistor 17 are connected in series. The order in which the switching element 16 and the variable resistor 17 are connected is not particularly limited. The control unit 14 turns ON or OFF the switching element 16. In addition, the control unit 14 changes the electric resistance value of the variable resistor 17. As a result, the control unit 14 changes the voltage or current of the power supplied to the four electrolysis modules 71, 72, 73, and 74.

The control unit 14 selectively executes a module load adjustment control and a module ON/OFF control, for each of the first to fourth electrolysis modules 71, 72, 73, 74, based on the amount of hydrogen production required for the entirety of the first to fourth electrolysis modules 71, 72, 73, 74. The module load adjustment control is to control the voltage or current of the power supplied to the first to fourth electrolysis modules 71, 72, 73, 74. The module ON/OFF control is to turn ON or OFF the power supplied to each of the first to fourth electrolysis modules 71, 72, 73, 74.

By executing the module load adjustment control and the module ON/OFF control individually for each of the first to fourth electrolysis modules 71, 72, 73, 74, the durability of the cell stacks included in the first to fourth electrolysis modules 71, 72, 73, 74 can be improved, and therefore the durability of the hydrogen production system 70 as a whole can be improved.

Each of the first to fourth electrolysis modules 71, 72, 73, and 74 has the first to fourth cell stacks 91, 92, 93, and 94. Therefore, the hydrogen production system 70 of this embodiment has a total of 16 cell stacks. It is simpler to execute the module load adjustment control or the module ON/OFF control for each of the four electrolysis modules 71, 72, 73, and 74 than to execute the load adjustment control or the ON/OFF control for each of the 16 cell stacks.

The present disclosure is not limited to the respective embodiments described above, and various modifications may be adopted within the scope of the present disclosure without departing from the spirit of the disclosure.

(1) The hydrogen production system may include the electrolysis module 61 described in the fifth embodiment and the multiple electrolysis modules 71, 72, 73, 74 described in the sixth embodiment. In other words, the electrolysis module 61 in which multiple cell stacks are individually controlled and the electrolysis modules 71, 72, 73, 74 to be individually controlled may be mixed in a single hydrogen production system.

(2) In the sixth embodiment, the hydrogen production system 70 may include the plural electrolysis modules 71, 72, 73, 74, and each of the electrolysis modules 71, 72, 73, 74 includes plural cell stacks 91, 92, 93, 94. In this case, each of the cell stacks 91, 92, 93, 94 may be selectively subjected to the load adjustment control and the ON/OFF control by the control unit 14.

Although the present disclosure has been described in accordance with the embodiments, it is understood that the present disclosure is not limited to such embodiments or structures. The present disclosure encompasses various modifications and variations within the scope of equivalents. In addition, while the various elements are shown in various combinations and configurations, which are exemplary, other combinations and configurations, including more, less or only a single element, are also within the spirit and scope of the present disclosure.

**Claims**

1. A hydrogen production system (10) comprising:

   a plurality of cell stacks (91, 92, 93) configured to produce hydrogen by electrolyzing water using an electric power; and
   a control unit (14) configured to control at least one specific cell stack of the plurality of cell stacks, wherein
   the control unit selectively executes a load adjustment control and an ON/OFF control based on an amount of hydrogen production required for entirety of the plurality of cell stacks,
   the control unit executes the load adjustment control to adjust a voltage or current of the electric power supplied to the specific cell stack, and
   the control unit executes the ON/OFF control to turn ON or OFF the electric power supplied to the specific cell stack.

2. The hydrogen production system according to claim 1, wherein
   in the ON/OFF control, when the electric power is turned ON, the voltage or current applied to the specific cell stack is set to a value that enables the specific cell stack to produce the hydrogen in a state where a heat absorption and a heat generation are balanced.

3. The hydrogen production system according to claim 1 or 2, wherein

   a specific cell load adjustment rate is defined by a percentage of an amount of hydrogen production required for the specific cell stack relative to a maximum value of a hydrogen production capacity of the specific cell stack,
   the ON/OFF control is performed to the specific cell stack when the specific cell load adjustment rate is larger than or equal to 0% and smaller than 50%, and
   the load adjustment control is performed when the specific cell load adjustment rate is larger than or equal to 50% and smaller than or equal to 100%.

4. The hydrogen production system according to claim 2, wherein

   a specific cell load adjustment rate is defined by a percentage of an amount of hydrogen production required for the specific cell stack relative to a maximum value of a hydrogen production capacity of the specific cell stack,
   a balance threshold value is set for the specific cell load adjustment rate, at which the specific cell stack is able to produce the hydrogen in a state where the heat absorption and the heat generation are balanced,
the ON/OFF control is performed to the specific cell stack when the specific cell load adjustment rate is larger than or equal to 0% and smaller than the balance threshold value, and
the load adjustment control is performed to the specific cell stack when the specific cell load adjustment rate is larger than or equal to the balance threshold value and smaller than or equal to 100%.

5. The hydrogen production system according to any one of claims 1 to 4, wherein each of the plurality of cell stacks includes an anode (18), a cathode (19), and a solid oxide electrolyte (20) disposed between the anode and the cathode.

6. The hydrogen production system according to any one of claims 1 to 5, further comprising:

an electrolysis module (61) including the plurality of cell stacks, wherein
all of the plurality of cell stacks included in the electrolysis module being the specific cell stack, and
the control unit selectively executes the load adjustment control and the ON/OFF control for each of the plurality of cell stacks.

7. The hydrogen production system according to any one of claims 1 to 5, further comprising:

a plurality of electrolysis modules (71, 72, 73, 74) each including the plurality of cell stacks, wherein
the control unit selectively executes, for each of the electrolysis modules, based on an amount of hydrogen production required for entirety of the electrolysis modules, a module load adjustment control to adjust a voltage or a current of electric power supplied to the electrolysis modules, and a module ON/OFF control to turn ON or OFF the electric power supplied to each of the electrolysis modules.

# FIG. 1

# FIG. 2

HEAT ABSORPTION ← | → HEAT GENERATION

AMOUNT OF REACTION HEAT

0

0        84    100

SPECIFIC CELL LOAD ADJUSTMENT RATE (%)

# FIG. 3

SPECIFIC CELL LOAD ADJUSTMENT RATE (%)

100

84

0

O        T1        T2        T3

REACTION TIME

VOLTAGE

FIG. 4

EP 4 497 846 A1

# FIG. 5

START

ACQUIRE SIGNAL RELATED
TO AMOUNT OF HYDROGEN — S1

CALCULATE TOTAL
LOAD ADJUSTMENT RATE — S2

S3
LESS
THAN OR EQUAL TO
33.3%?

YES → ONE-CELL PROCESS — S7

NO

S4
LESS
THAN OR EQUAL TO
66.7%?

YES → TWO-CELL PROCESS — S8

NO

THREE-CELL PROCESS — S5

S6
FINISH?

NO

YES

END

# FIG. 6

```
        ( ONE-CELL PROCESS )
                 │
                 ▼           S9
            ╱─────────╲              YES        ┌─────────────────┐ S11
           ╱ LESS THAN  ╲──────────────────────▶│  ON/OFF CONTROL │
           ╲   28%?     ╱                        └─────────────────┘
            ╲─────────╱                                   │
                 │ NO        S10                          │
                 ▼                                        │
     ┌─────────────────────────┐                         │
     │ LOAD ADJUSTMENT CONTROL │                         │
     └─────────────────────────┘                         │
                 │◀──────────────────────────────────────┘
                 ▼
         ( TO NEXT PROCESS )
```

# FIG. 7

```
        ( TWO-CELL PROCESS )
                 │
                 ▼           S12                          ┌─────────────────┐ S16
            ╱─────────╲              YES                  │   FIRST CELL    │
           ╱ LESS THAN  ╲──────────────────────────────▶│  ON/OFF CONTROL │
           ╲   56%?     ╱                                └─────────────────┘
            ╲─────────╱                                           │ S17
                 │ NO                                             ▼
                 │                                      ┌─────────────────┐
                 │                                      │ SECOND CELL 28% │
                 ▼                                      └─────────────────┘
            ╱─────────╲           S13                            │
           ╱ LESS THAN  ╲              YES          ┌─────────────────────────┐ S18
           ╲  61.3%?    ╱──────────────────────────▶│      FIRST CELL LOAD     │
            ╲─────────╱                             │   ADJUSTMENT CONTROL     │
                 │ NO        S14                    └─────────────────────────┘
                 ▼                                           │ S19
     ┌─────────────────────────┐                            ▼
     │    FIRST CELL 33.3%     │                  ┌─────────────────┐
     └─────────────────────────┘                  │ SECOND CELL 28% │
                 │ S15                             └─────────────────┘
                 ▼                                          │
     ┌─────────────────────────┐                           │
     │   SECOND CELL LOAD      │                           │
     │   ADJUSTMENT CONTROL    │                           │
     └─────────────────────────┘                           │
                 │◀───────────────────────────────────────┘
                 ▼
         ( TO NEXT PROCESS )
```

# FIG. 8

```
                    ( THREE-CELL PROCESS )
                              │
                              ▼
                   ╱────────────────╲  ～S20        YES        ┌──────────────────┐ ～S26
                  ╱   LESS THAN 84%?  ╲ ──────────────────────▶│   FIRST CELL     │
                   ╲                 ╱                         │  ON/OFF CONTROL  │
                    ╲───────────────╱                          └──────────────────┘
                          │ NO                                          │ ～S27
                          │                                    ┌──────────────────┐
                          │                                    │ SECOND CELL 28%  │
                          │                                    └──────────────────┘
                          │                                             │ ～S28
                          │                                    ┌──────────────────┐
                          ▼                                    │  THIRD CELL 28%  │
                   ╱────────────────╲  ～S21                   └──────────────────┘
                  ╱                  ╲        YES                        │
                 ╱  LESS THAN 89.3%?  ╲ ──────────────────────┐         │
                  ╲                  ╱                        │         │
                   ╲────────────────╱                        ▼         │
                          │ NO                     ┌──────────────────────┐ ～S29
                          │                        │   FIRST CELL LOAD    │
                          │                        │  ADJUSTMENT CONTROL  │
                          │                        └──────────────────────┘
                          │                                   │ ～S30
                          │                        ┌──────────────────────┐
                          │                        │   SECOND CELL 28%    │
                          │                        └──────────────────────┘
                          │                                   │ ～S31
                          │                        ┌──────────────────────┐
                          ▼                        │    THIRD CELL 28%    │
                   ╱────────────────╲  ～S22       └──────────────────────┘
                  ╱                  ╲      YES                │
                 ╱  LESS THAN 94.7%?  ╲ ────────┐             │
                  ╲                  ╱          ▼             │
                   ╲────────────────╱   ┌──────────────────┐ ～S32
                          │ NO          │ FIRST CELL 33.3% │
                          │ ～S23       └──────────────────┘
              ┌──────────────────┐               │ ～S33
              │ FIRST CELL 33.3% │      ┌──────────────────────┐
              └──────────────────┘      │   SECOND CELL LOAD   │
                          │ ～S24        │  ADJUSTMENT CONTROL  │
              ┌──────────────────┐      └──────────────────────┘
              │ SECOND CELL 33.3%│               │ ～S34
              └──────────────────┘      ┌──────────────────┐
                          │ ～S25        │  THIRD CELL 28%  │
              ┌──────────────────┐      └──────────────────┘
              │  THIRD CELL LOAD │               │
              │ ADJUSTMENT CONTROL│              │
              └──────────────────┘              │
                          │◀──────────────────────┘
                          ▼
                  ( TO NEXT PROCESS )
```

# FIG. 9

# FIG. 10

OVERALL LOAD ADJUSTMENT RATE (%)

VOLTAGE

S29,S33,S25
S26
S18,S15
S16
S10
S11

100
84
66.7
56
33.3
28
0

A  B  C  D  E  F  G  H  I

TIME

# FIG. 11

# FIG. 12

# FIG. 13

# FIG. 14

# FIG. 15

# FIG. 16

**FIG. 17**

## INTERNATIONAL SEARCH REPORT

| International application No. |
| --- |
| **PCT/JP2023/004591** |

### A. CLASSIFICATION OF SUBJECT MATTER

*C25B 9/00*(2021.01)i; *C25B 15/023*(2021.01)i; *C25B 1/04*(2021.01)i
FI:  C25B9/00 A; C25B1/04; C25B15/023

According to International Patent Classification (IPC) or to both national classification and IPC

### B. FIELDS SEARCHED

Minimum documentation searched (classification system followed by classification symbols)

C25B9/00; C25B15/023; C25B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/029605 A1 (VERSA POWER SYSTEMS, LTD) 10 February 2022 (2022-02-10) paragraphs [0004]-[0006], [0070]-[0078], fig. 1-4 | 1-5 |
| Y | | 6, 7 |
| Y | JP 2020-041202 A (TOSHIBA ENERGY SYSTEM & SOLUTION CORP) 19 March 2020 (2020-03-19) paragraphs [0035]-[0040], fig. 6 | 6, 7 |
| P, A | JP 2022-125850 A (HITACHI LTD) 29 August 2022 (2022-08-29) paragraphs [0016]-[0045], fig. 1-11 | 1-7 |

☐ Further documents are listed in the continuation of Box C. ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **05 April 2023** | **25 April 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/004591**

| Patent document cited in search report | | | Publication date (day/month/year) | Patent family member(s) | | | Publication date (day/month/year) |
|---|---|---|---|---|---|---|---|
| WO | 2022/029605 | A1 | 10 February 2022 | US paragraphs [0004]-[0006], [0080]-[0088], fig. 1-4 | 2022/0042190 | A1 | |
| JP | 2020-041202 | A | 19 March 2020 | (Family: none) | | | |
| JP | 2022-125850 | A | 29 August 2022 | EP paragraphs [0013]-[0042], fig. 1-11 | 4047112 | A2 | |

Form PCT/ISA/210 (patent family annex) (January 2015)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022047530 A

- JP 2020041202 A